# EUROPÄISCHE PATENTSCHRIFT

(11) **EP 1 426 206 B1**
(45) Veröffentlichungstag und Bekanntmachung des Hinweises auf die Patenterteilung: **21.06.2006**
(21) Anmeldenummer: 03027133.2
(22) Anmeldetag: 26.11.2003
(51) Int. Cl.: B60G 15/06

(54) **Federbein mit höheneinstellbarem Federteller**
Suspension strut with a height-adjustable spring plate
Jambe de suspension avec une coupelle réglable en hauteur

(30) Priorität: 02.12.2002 DE 10256407
(43) Veröffentlichungstag der Anmeldung: 09.06.2004
(73) Patentinhaber: ZF Sachs AG, 97424 Schweinfurt (DE)
(72) Erfinder: Miller, Alexander, 97078 Würzburg (DE); Schuler, Manfred, 97456 Dittelbrunn (DE); Stretz, Klaus, 97437 Hassfurt (DE)

(56) Entgegenhaltungen:
- DE-A- 2 935 610
- DE-C- 10 144 163
- DE-C- 19 851 019

## Beschreibung

Die Erfindung betrifft ein Federbein mit einem höheneinstellbaren Federteller gemäß dem Oberbegriff von Patentanspruch 1.

Aus der DE 85 10 058 U1 ist ein Federbein mit einem lösbar angeordneten Federteller bekannt, wobei der Federteller in einem Haltering gelagert ist. Der Haltering wiederum kann unabhängig vom Federteller am Zylinder des Federbeins befestigt und als Baueinheit lackiert werden. Die Höheneinstellung des Federtellers wird durch den Haltering bestimmt und ist nicht veränderbar.

Die DE 198 51 019 C1 offenbart ein Federbein, dessen Zylinder einen Haltering für einen fest einstellbaren Federteller trägt. In dem Haltering ist mindestens eine Nut eingeformt, in die mindestens ein Umfangsbereich eines Hülsenabschnitts des Federtellers radial verformt werden kann. Die Überdeckung des Hülsenabschnitts mit der Nut bestimmt das Maß für die maximale Höhenverstellung des Federtellers.

Des weiteren ist aus der DE 197 44 757 A1 ein Federaggregat für Kraftfahrzeuge bekannt, bei dem ein Federteller aktiv durch den Einsatz von einem Hydraulikmedium in seiner Höhenlage veränderbar ist. Ein derartiges Federaggregat ist insbesondere für Fahrzeuge der gehobenen Kategorie vorgesehen, bei der mit einer häufigeren Federtellereinstellung im Zusammenhang mit einer Niveauregulierung des Fahrzeugaufbaus gerechnet werden muss.

Aufgabe der vorliegenden Erfindung ist es, ein Federbein mit einem höheneinstellbaren und in Umfangsrichtung lageorientierten Federteller zu schaffen.

Erfindungsgemäß wird die Aufgabe dadurch gelöst, dass zylinderseitig eine Kammer angeordnet ist, die mit einem urformbaren Werkstoff zumindest teilgefüllt ist, wobei der Hülsenabschnitt mit dem urformbaren Werkstoff in Kontakt steht, der im festen Zustand eine Stützkraft vom Zylinder auf den Federteller überträgt, wobei in dem Kraftübertragungsweg vom Federteller zum Zylinder eine formschlüssige Verdrehsicherungsverbindung vorliegt, die die Lage des Federtellers in Umfangsrichtung zum Zylinder bestimmt.

Als urformbarer Werkstoff können Kunststoffe, aber auch metallische Werkstoffe verwendet werden. Bei der Höhenjustierung wird der Federteller in seiner vorbestimmten Position gehalten und eine entsprechende Menge an urformbaren Werkstoff in die Kammer eingefüllt.

Dabei kann vorgesehen sein, dass die zylinderseitige Kammer von einem Tragring gebildet wird, der mit dem Zylinder axial fest verbunden ist.

In weiterer vorteilhafter Ausgestaltung weist der Tragring eine Hülse und einen Boden auf und der Hülsenabschnitt wird zumindest teilweise innerhalb Hülse des Tragrings gehalten. Bei dieser Variante bildet der Tragring die Kammer für den urformbaren Werkstoff.

Im Hinblick auf eine gute Zugänglichkeit für eine entsprechende Vorrichtung weist der Tragring eine Anschlussöffnung für den urformbaren Werkstoff auf.

Bei einer Variante der Erfindung weist der Hülsenabschnitt des Federtellers mindestens ein in Umfangsrichtung beschränktes Verdrehsicherungsprofil zur Aufnahme des urformbaren Werkstoffs auf. Die Lageorientierung in Umfangsrichtung erfolgt nicht ausschließlich über die Scherfestigkeit des erhärteten urformbaren Werkstoffs in der Kammer des Tragrings, sondern zusätzlich durch die Verbindung zwischen dem urformbaren Werkstoff und dem Verdrehsicherungsprofil des Federtellers.

Alternativ oder zusätzlich kann auch der Tragring mindesten ein in Umfangsrichtung beschränktes Eingriffsprofil zur Aufnahme des urformbaren Werkstoffs aufweisen.

In weiterer Ausgestaltung wird das Eingriffsprofil und/oder das Verdrehsicherungsprofil von mindestens einer in Umfangsrichtung begrenzten Tasche gebildet. Eine Tasche verfügt über seitliche Begrenzungsflächen, an denen sich der urformbare Werkstoff in Umfangsrichtung abstützen kann.

Der Spalt zwischen dem Hülsenabschnitt und dem Tragring sollte nicht zu breit werden, damit der urformbare Werkstoff nicht über den Rand quillt. Deshalb erstreckt sich die Tasche maximal bis unterhalb des Randes des Tragringsrings erstreckt.

Insbesondere wenn der Tragring ein Eingriffsprofil aufweist ist es im Hinblick auf eine dünne Wandstärke des urformbaren Werkstoffs in der Kammer des Tragrings sinnvoll, wenn das Verdrehsicherungsprofil im Hülsenabschnitt des Federtellers an der Innenwandung ausgeführt ist. Es kann keine räumliche Überschneidung zwischen dem Verdrehsicherungsprofil und dem Eingriffsprofil kommen.

Eine weitere sinnvolle Anordnung des Eingriffsprofile besteht darin, dass das Eingriffsprofil im Tragring innerhalb des Bodens ausgeführt ist. Am Boden können sich kaum Blasen oder Fehlstellen bilden, da der Druck des Federtellers innerhalb der Kammer stets für eine Verdichtung des urformbaren Werkstoffs innerhalb der Kammer sorgt.

Alternativ oder zusätzlich kann das Verdrehsicherungsprofil im Hülsenabschnitt des Federtellers von mindestens einer Öffnung gebildet werden. Der Vorteil dieser Maßnahme besteht darin, dass die Verteilung des urformbaren Werkstoffs innerhalb der Kammer an der Innen- und Außenwandung des Hülsenabschnitts schneller erfolgt als bei einem taschenförmigen Profil.

Bei den vorstehend beschriebenen Ausführungsformen übernimmt der urformbare Werkstoff die Funktion der Verdrehsicherung. Alternativ kann zwischen dem Federteller und dem Tragring eine Verdrehsicherungshülse angeordnet ist, die in das Eingriffsprofil des Tragrings und das Verdrehsicherungsprofil des Federtellers eingreift.

Dabei weist die Verdrehsicherungshülse eine Strömungsanbindung zwischen der Stirnfläche des Hülsenabschnitts und der Anschlussöffnung im Tragring auf. Es soll eine gezielte Zufuhr von urformbaren Werkstoff an die für die Funktion der Höhenverstellung relevante Funktionsfläche des Federtellers erreicht werden.

Des weiteren ist vorgesehen, dass die Verdrehsicherungshülse innerhalb des Eingriffsprofils des Tragringsaxial ortsfest gelagert ist. Damit wird verhindert, dass die Verdrehsicherungshülse beim Einspritzen des urformbaren Werkstoffs aufschwimmen kann und ein undefinierter Füllungszustand innerhalb der Kammer auftritt.

Eine weitere Variante zeichnet sich dadurch aus, dass das Eingriffsprofil des Tragrings in das Verdrehsicherungsprofil des Federtellers eingreift. Es besteht eine direkte formschlüssige Verbindung zwischen dem Tragring und dem Federteller.

Der Tragring weist als Eingriffsprofil mindestens einen radialen Vorsprung auf, der in das Verdrehsicherungsprofil des Federtellers eingreift.

Zur Vermeidung von Leckagen am Tragring ist der radiale Vorsprung am Tragring außerhalb der Kammer angeordnet.

Anhand der folgenden Figurenbeschreibung soll die Erfindung näher erläutert werden.

Es zeigt:
- Fig. 1 - 2: Verdrehsicherungsverbindung durch Auffüllen von urformbaren Werkstoffs in Profile des Tragring für des Federtellers
- Fig. 3: Verdrehsicherungshülse zwischen Federteller und Tragring
- Fig. 4: Direkte Verdrehsicherungsverbindung zwischen Federteller und Tragring

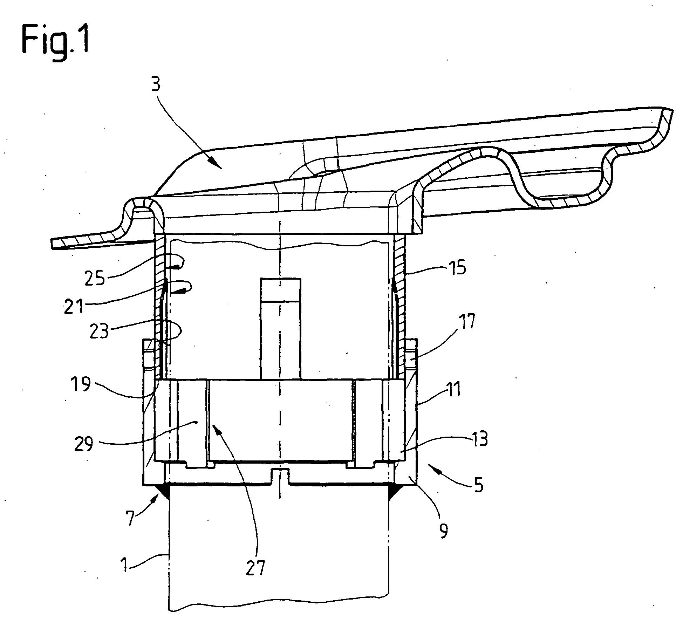

Die Fig. 1 beschränkt sich auf einen Abschnitt eines Zylinders 1, der einen Federteller 3 trägt. Der Zylinder kann Teil eines Federbeins oder auch einer Gasfeder sein. Innerhalb des Zylinders kann ein Kolben axial beweglich oder ein koaxiales Druckrohr angeordnet sein, in dem ein Arbeitsmedium eingeschlossen ist.

Zylinderseitig ist ein Tragring 5 in Umfangsrichtung definiert befestigt, wobei verschiedene Befestigungsmittel denkbar sind. In diesem Fall ist eine Schweißnaht 7 eingezeichnet. Der Tragring 5 besteht aus einem Boden 9 und einer Hülse 11, so dass der Tragring zusammen mit dem Zylinder eine ringförmige Kammer 13 bildet. Innerhalb dieser Kammer ist ein unteres Ende eines Hülsenabschnitts 15 des Federtellers 3 angeordnet und axial verschiebbar geführt. Über eine Anschlussöffnung 1 7 im Tragring wird die Kammer 1 3 mit einem urformbaren Werkstoff zumindest bis zur unteren Stirnfläche 19 des Hülsenabschnitts 15 gefüllt. Als urformbare Werkstoffe sind flüssige Kunststoffe oder auch metallische, aushärtbare Werkstoffe denkbar.

Wenn der Zylinder 1 Bestandteil eines Schwingungsdämpfers ist, dann wird beispielsweise am Ende der Fahrzeugmontage eine nicht dargestellte Haltevorrichtung am Federteller 3 angesetzt, um das Fahrzeug horizontal auszurichten. Dabei verschiebt sich der Hülsenabschnitt des Federtellers innerhalb der Kammer. Ist die vorbestimmte Höheneinstellung erreicht, dann wird die Kammer mit dem urformbaren Werkstoff zumindest bis zur unteren Stirnfläche des Hülsenabschnitts gefüllt. Sobald der urformbare Werkstoff ausreichend ausgehärtet ist, kann die Haltevorrichtung entfernt werden und man hat eine Horizontierung des Fahrzeugs unabhängig von der individuellen Ausstattung erreicht.

Ein Federteller am Federbein wird auch häufig in Umfangsrichtung ausgerichtet, um z. B. in einen bestimmten Einbauraum zu passen oder um einen bestimmten Wirklinienverlauf der Feder zu erreichen. Dazu wird im Kraftübertragungsweg vom Federteller 3 über den Tragring zum Zylinder eine Verdrehsicherungsverbindung eingesetzt, das die Lager des Federtellers in Umfangsrichtung zum Zylinder bestimmt. Dazu verfügt der Hülsenabschnitt 1 5 des Federtellers über mindestens ein in Umfangsrichtung beschränktes Verdrehsicherungsprofil 21 zur Aufnahme des urformbaren Werkstoffs. In diesem Ausführungsbeispiel wird das Verdrehsicherungsprofil von mindestens einer in Umfangsrichtung begrenzten Tasche 23 an der Innenwandung 25 im Hülsenabschnitt 15 des Federtellers 3 gebildet. Auch der Tragring verfügt zur Aufnahme des urformbaren Werkstoff über ein in Umfangsrichtung beschränktes Eingriffsprofil 27 in der Form einer Tasche 29. Beide Taschen 23; 29 sind in ihrer Länge und Lage an den jeweiligen Bauteilen derart bestimmt, dass sich die Taschen auch bei einer maximalen Auszugslänge des Hülsenabschnitts aus dem Tragring bis maximal unterhalb des Rand des Tragrings erstrecken, damit am oberen Rand des Tragrings ein möglichst enger Spalt zum Hülsenabschnitt vorliegt. Wenn die Kammer mit urformbaren Werkstoff gefüllt wird, dann füllen sich zumindest teilweise auch die Taschen des Eingriffsprofils und des Verdrehsicherungsprofils, so dass über den ausgehärteten Werkstoff, der sich an den Seitenwänden der Taschen abstützen kann, die formschlüssige Verdrehsicherungsverbindung zwischen dem Federteller und dem Zylinder erreicht wird.

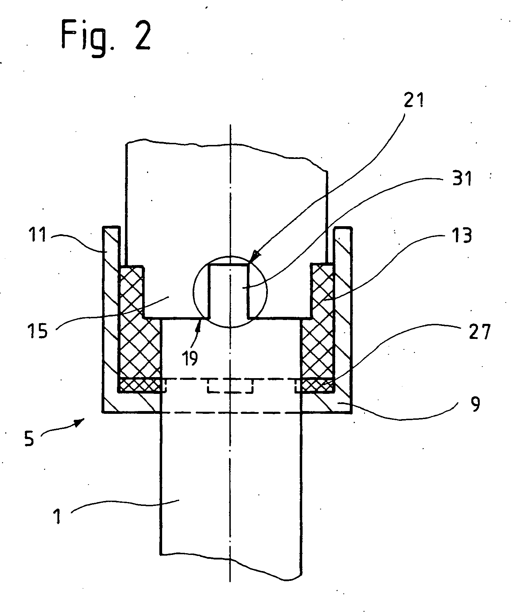

Das gleiche wie zur Fig. 1 beschriebene Prinzip wird auch bei der Variante nach Fig. 2 verwendet. Abweichend besteht das Eingriffsprofil 27 im Tragring 5 aus Taschen 29 im Boden 9 und das Verdrehsicherungsprofil 21 aus Öffnungen 31, die sich in diesem Fall ausgehend von der Stirnfläche 19 des Hülsenabschnitts 15 in Richtung des Federtellers 3 erstrecken.

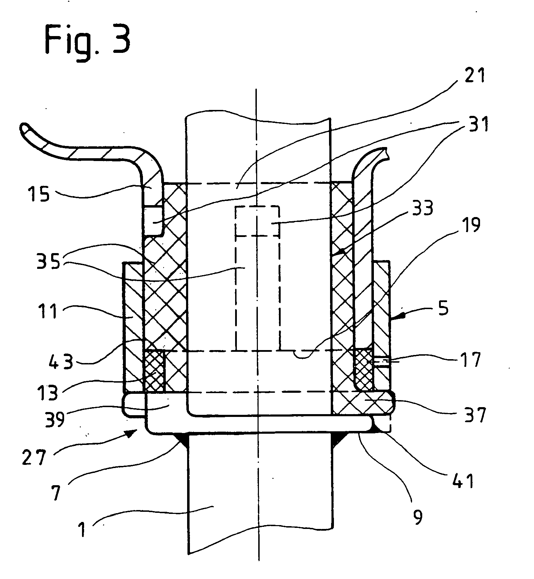

In der Fig. 3 kommt zwischen dem Federteller 3 bzw. dem Hülsenabschnitt 15 und dem Tragring 5 eine Verdrehsicherungshülse 33 zur Anwendung, die einerseits mit einem Profil, in diesem Fall einem Steg 35 in die Öffnung 31 des Verdrehsicherungsprofils 21 und mindestens einem Vorsprung 37 in das Eingriffsprofil des Tragrings eingreift. Der Vorsprung 37 kann auch als umlaufender Kreisring ausgeführt sein, der mindestens eine Aussparung zur Aufnahme eines Segments 39 als Eingriffsprofil 27 des Bodens 9 aufweist. Die Hülse 11 des Tragrings 5 muss nicht unbedingt mit dem Boden fest verbunden sein, da die Belastung des Federtellers auf den Boden 9 des Tragrings gerichtet ist. Man kann allerdings auch zwischen dem Boden 9 und der Hülse eine feste Verbindung, z. B. eine Schweißnaht 41 vorgesehen, wenn die Hülse 11 den Vorsprung 37 bis zum Boden 9 übergreift, wie mit den gestrichelten Linien dargestellt werden soll. Alternativ könnte auch eine Klemmverbindung zwischen Boden und Hülse vorliegen. In beiden Fällen ist die Verdrehsicherungshülse innerhalb des Eingriffsprofils des Tragrings axial ortsfest gelagert.

An der Verdrehsicherungshülse 33 ist in Richtung des Bodens 9 ein umlaufender Absatz 43 ausgeführt, der eine Strömungsanbindung zwischen der Stirnfläche 1 9 des Hülsenabschnitts 15 und der Anschlussöffnung 17 darstellt. Letztlich bildet die Strömungsverbindung auch gleichzeitig die Kammer 13.

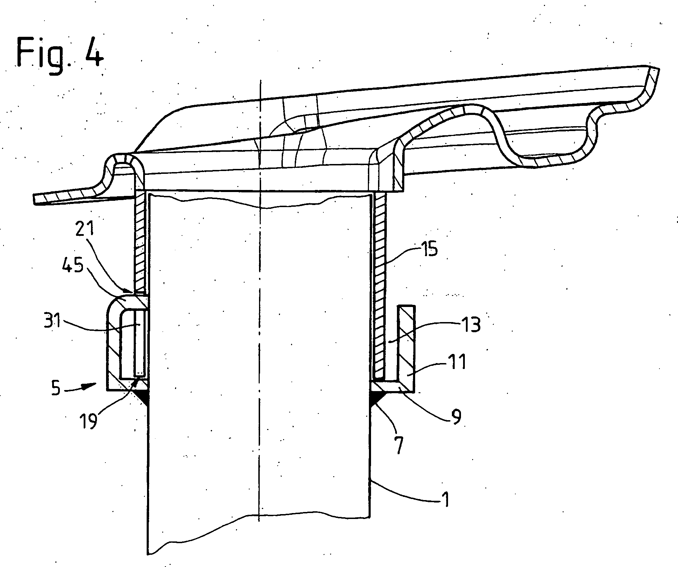

In der Figur 4 besteht die Verdrehsicherungsverbindung direkt zwischen dem Federteller 3 oder präziser zwischen dem Hülsenabschnitt 15 und der Hülse 11 des Tragrings 5. Dazu verfügt der Tragring als Eingriffsprofil über mindestens einen radialen Vorsprung 45, der in das Verdrehsicherungsprofil 21 des Federtellers 3 eingreift. Das Verdrehsicherungsprofil 21 wird wiederum von einer Öffnung 31 gebildet, die sich von der Stirnfläche 19 des Hülsenabschnitts 15 in Richtung des Federtellers 3 erstreckt. Wie man anhand der Fig. 4 erkennt, ist der radiale Vorsprung 45 am Tragring 5 außerhalb der Kammer angeordnet, ausgehend vom oberen Rand der Hülse 1.1. Wird die Kammer 13 mit urformbaren Werkstoff gefüllt, dann stellt auch die Öffnung 31 eine Verdrehsicherungsverbindung mit dem urformbaren Werkstoff dar. Selbstverständlich kann man z. B. die Variante nach Fig. 4 mit einer Lösung nach den Fig. 1 oder 2 kombinierten.

## Patentansprüche

1. Federbein, umfassend einen Zylinder (1), zu dem ein Federteller (3) zwecks Emstellung der Position axial verschiebbar ist, wobei der Federteller (3) einen Hülsenabschnitts (15) aufweist, über den die Verbindung zum Zylinder (1) ausgeführt ist,
**dadurch gekennzeichnet,**
**dass** zylinderseitig eine Kammer (13) angeordnet ist, die mit einem urformbaren Werkstoff zumindest teilgefüllt ist, wobei der Hülsenabschnitt (15) mit dem urformbaren Werkstoff in Kontakt steht, der im festen Zustand eine Stützkraft vom Zylinder (1) auf den Federteller (3) überträgt, wobei in dem Kraftübertragungsweg vom Federteller (3) bis zum Zylinder (1) eine formschlüssige Verdrehsicherungsverbindung (21; 27) eingesetzt wird, die die Lage des Federtellers zum Zylinder bestimmt.

2. Federbein nach Anspruch 1,
**dadurch gekennzeichnet,**
**dass** die zylinderseitige Kammer (13) von einem Tragring (5) gebildet wird, der mit dem Zylinder (1) axial fest verbunden ist.

3. Federbein nach Anspruch 2,
**dadurch gekennzeichnet,**
**dass** der Tragring (5) eine Hülse (11) und einen Boden (9) aufweist und der Hülsenabschnitt (15) zumindest teilweise innerhalb Hülse (11) des Tragrings (5) gehalten wird.

4. Federbein nach Anspruch 2,
**dadurch gekennzeichnet,**
**dass** der Tragring (5) eine Anschlussöffnung (17) für den urformbaren Werkstoff aufweist.

5. Federbein nach Anspruch 1,
**dadurch gekennzeichnet,**
**dass** der Hülsenabschnitt (15) des Federtellers (3) mindestens ein in Umfangsrichtung beschränktes Verdrehsicherungsprofil (21) zur Aufnahme des urformbaren Werkstoffs aufweist.

6. Federbein nach Anspruch 1,
**dadurch gekennzeichnet,**
**dass** der Tragring (5) mindesten ein in Umfangsrichtung beschränktes Eingriffsprofil (27) zur Aufnahme des urformbaren Werkstoffs aufweist.

7. Federbein nach den Ansprüchen 5 oder 6,
**dadurch gekennzeichnet,**
**dass** das Eingriffsprofil und/oder das Verdrehsicherungsprofil (27; 21) von mindestens einer in Umfangsrichtung begrenzten Tasche (23; 27) gebildet wird.

8. Federbein nach Anspruch 7,
**dadurch gekennzeichnet,**
**dass** sich die Tasche (23; 27) maximal bis unterhalb des Randes des Tragringsrings (5) erstreckt.

9. Federbein nach Anspruch 5,
**dadurch gekennzeichnet,**
**dass** das Verdrehsicherungsprofil (21) im Hülsenabschnitt (15) des Federtellers(3) an der Innenwandung (25) ausgeführt ist.

10. Federbein nach Anspruch 6,
**dadurch gekennzeichnet,**
**dass** das Eingriffsprofil (27) im Tragring (5) innerhalb des Bodens (9) ausgeführt ist.

11. Federbein nach Anspruch 5,
**dadurch gekennzeichnet,**
**dass** Verdrehsicherungsprofil (21) im Hülsenabschnitt (15) des Federtellers (3) von mindestens einer Öffnung (31) gebildet wird.

12. Federbein nach Anspruch 1,
**dadurch gekennzeichnet,**
**dass** zwischen dem Federteller (3) und dem Tragring (5) eine Verdrehsicherungshülse (33) angeordnet ist, die in das Eingriffsprofil (27) des Tragrings (5) und das Verdrehsicherungsprofil (21) des Federtellers (3) eingreift.

13. Federbein nach Anspruch 12,
**dadurch gekennzeichnet,**
**dass** die Verdrehsicherungshülse (33) eine Strömungsanbindung zwischen der Stirnfläche (19) des Hülsenabschnitts (15) und der Anschlussöffnung (17) im Tragring (5) aufweist.

14. Federbein nach Anspruch 12,
**dadurch gekennzeichnet,**
**dass** die Verdrehsicherungshülse (33) innerhalb des Eingriffsprofils (27) des Tragrings (5) axial ortsfest gelagert ist.

15. Federbein nach Anspruch 1,
**dadurch gekennzeichnet,**
**dass** das Eingriffsprofil (27) des Tragrings (5) in das Verdrehsicherungsprofil (21) des Federtellers (5) eingreift.

16. Federbein nach Anspruch 15,
**dadurch gekennzeichnet,**
**dass** der Tragring (5) als Eingriffsprofil (27) mindestens einen radialen Vorsprung (45) aufweist, der in das Verdrehsicherungsprofil (21) des Federtellers (3) eingreift.

17. Federbein nach Anspruch 16 ,
**dadurch gekennzeichnet,**
**dass** der radiale Vorsprung (45) am Tragring (5) außerhalb der Kammer ang (13) eordnet.

## Claims

1. Spring strut, comprising a cylinder (1), with respect to which a spring collar (3) can be displaced axially for the purpose of setting the position, the spring collar (3) having a sleeve section (15), via which the connection to the cylinder (1) is carried out, **characterized in that** a chamber (13) is arranged on the cylinder side, which chamber (13) is at least partially filled with a material which can be produced at the primary forming stage, the sleeve section (15) being in contact with the material which can be produced at the primary forming stage and, in the solid state, transmits a supporting force from the cylinder (1) to the spring collar (3), a force-fitting anti-rotation safeguard connection (21; 27) which defines the position of the spring collar with respect to the cylinder being inserted in the force transmission path from the spring collar (3) to the cylinder (1).

2. Spring strut according to Claim 1, **characterized in that** the cylinder-side chamber (13) is formed by a carrying ring (5) which is connected in an axially fixed manner to the cylinder (1).

3. Spring strut according to Claim 2, **characterized in that** the carrying ring (5) has a sleeve (11) and a base (9), and the sleeve section (15) is held at least partially within the sleeve (11) of the carrying ring (5) .

4. Spring strut according to Claim 2, **characterized in that** the carrying ring (5) has a connection opening (17) for the material which can be produced at the primary forming stage.

5. Spring strut according to Claim 1, **characterized in that** the sleeve section (15) of the spring collar (3) has at least one anti-rotation safeguard profile (21) which is restricted in the circumferential direction for accommodating the material which can be produced at the primary forming stage.

6. Spring strut according to Claim 1, **characterized in that** the carrying ring (5) has at least one engagement profile (27) which is restricted in the circumferential direction for accommodating the material which can be produced at the primary forming stage.

7. Spring strut according to Claim 5 or 6, **characterized in that** the engagement profile and/or the anti-rotation safeguard profile (27; 21) are/is formed by at least one pocket (23; 27) which is delimited in the circumferential direction.

8. Spring strut according to Claim 7, **characterized in that** the pocket (23; 27) extends at most until below the edge of the carrying ring (5).

9. Spring strut according to Claim 5, **characterized in that** the anti-rotation safeguard profile (21) is configured in the sleeve section (15) of the spring collar (3) on the inner wall (25).

10. Spring strut according to Claim 6, **characterized in that** the engagement profile (27) is configured in the carrying ring (5) within the base (9).

11. Spring strut according to Claim 5, **characterized in that** the anti-rotation safeguard profile (21) is formed by at least one opening (31) in the sleeve section (15) of the spring collar (3).

12. Spring strut according to Claim 1, **characterized in that** an anti-rotation safeguard sleeve (33) is arranged between the spring collar (3) and the carrying ring (5), which anti-rotation safeguard sleeve (33) engages into the engagement profile (27) of the carrying ring (5) and into the anti-rotation safeguard profile (21) of the spring collar (3).

13. Spring strut according to Claim 12, **characterized in that** the anti-rotation safeguard sleeve (33) has a flow connection between the end face (19) of the sleeve section (15) and the connection opening (17) in the carrying ring (5).

14. Spring strut according to Claim 12, **characterized in that** the anti-rotation safeguard sleeve (33) is mounted in an axially stationary manner within the engagement profile (27) of the carrying ring (5).

15. Spring strut according to Claim 1, **characterized in that** the engagement profile (27) of the carrying ring (5) engages into the anti-rotation safeguard profile (21) of the spring collar (3).

16. Spring strut according to Claim 15, **characterized in that** the carrying ring (5) has, as engagement profile (27), at least one radial projection (45) which engages into the anti-rotation safeguard profile (21) of the spring collar (3).

17. Spring strut according to Claim 16, **characterized in that** the radial projection (45) is arranged on the carrying ring (5) outside the chamber (13).

## Revendications

1. Jambe de suspension, comprenant un cylindre (1), par rapport auquel une coupelle (3) est déplaçable axialement en vue de régler sa position, dans laquelle la coupelle (3) présente une partie de douille (15) réalisant l'assemblage avec le cylindre (1), **caractérisée en ce qu'**une chambre (13) est disposée du côté du cylindre et est au moins en partie remplie d'une matière déformable primaire, dans laquelle la partie de douille (15) est en contact avec la matière déformable primaire, qui à l'état solide transmet une force d'appui du cylindre (1) à la coupelle (3), dans laquelle une jonction de blocage de rotation (21; 27) par emboîtement est insérée dans le chemin de transmission de force de la coupelle (3) jusqu'au cylindre (1), qui détermine la position de la coupelle par rapport au cylindre.

2. Jambe de suspension selon la revendication 1, **caractérisée en ce que** la chambre côté cylindre (13) est formée par une bague de support (5), qui est solidement assemblée axialement au cylindre (1).

3. Jambe de suspension selon la revendication 2, **caractérisée en ce que** la bague de support (5) comprend une douille (11) et un fond (9) et la partie de douille (15) est maintenue au moins en partie à l'intérieur de la douille (11) de la bague de support (5).

4. Jambe de suspension selon la revendication 2, **caractérisée en ce que** la bague de support (5) présente une ouverture de raccordement (17) pour la matière déformable primaire.

5. Jambe de suspension selon la revendication 1, **caractérisée en ce que** la partie de douille (15) de la coupelle (3) présente au moins un profil de blocage de rotation (21) limité dans le sens périphérique, destiné à recevoir la matière déformable primaire.

6. Jambe de suspension selon la revendication 1, **caractérisée en ce que** la bague de support (5) présente au moins un profil d'engagement (27) limité dans le sens périphérique, destiné à recevoir la matière déformable primaire.

7. Jambe de suspension selon les revendications 5 ou 6, **caractérisée en ce que** le profil d'engagement et/ou le profil de blocage de rotation (27; 21) est formé par au moins une poche (23; 27) limitée dans le sens périphérique.

8. Jambe de suspension selon la revendication 7, **caractérisée en ce que** la poche (23; 27) s'étend au maximum jusqu'en dessous du bord de la bague de support (5).

9. Jambe de suspension selon la revendication 5, **caractérisée en ce que** le profil de blocage de rotation (21) est réalisé sur la paroi intérieure (25) dans la partie de douille (15) de la coupelle (3).

10. Jambe de suspension selon la revendication 6, **caractérisée en ce que** le profil d'engagement (27) est formé dans la bague de support (5) à l'intérieur du fond (9).

11. Jambe de suspension selon la revendication 5, **caractérisée en ce que** le profil de blocage de rotation (21) dans la partie de douille (15) de la coupelle (3) est formé par au moins une ouverture (31).

12. Jambe de suspension selon la revendication 1, **caractérisée en ce que**, entre la coupelle (3) et la bague de support (5), est disposée une douille de blocage de rotation (33) qui s'engage dans le profil d'engagement (27) de la bague de support (5) et dans le profil de blocage de rotation (21) de la coupelle (3).

13. Jambe de suspension selon la revendication 12, **caractérisée en ce que** la douille de blocage de rotation (33) présente une liaison d'écoulement entre la face frontale (19) de la partie de douille (15) et l'ouverture de raccordement (17) dans la bague de support (5).

14. Jambe de suspension selon la revendication 12, **caractérisée en ce que** la douille de blocage de rotation (33) est montée de façon fixe axialement à l'intérieur du profil d'engagement (27) de la bague de support (5).

15. Jambe de suspension selon la revendication 1, **caractérisée en ce que** le profil d'engagement (27) de la bague de support (5) s'engage dans le profil de blocage de rotation (21) de la coupelle (3).

16. Jambe de suspension selon la revendication 15, **caractérisée en ce que** la bague de support (5) présente comme profil d'engagement (27) au moins une saillie radiale (45), qui s'engage dans le profil de blocage de rotation (21) de la coupelle (3).

17. Jambe de suspension selon la revendication 16, **caractérisée en ce que** la saillie radiale (45) est disposée sur la bague de support (5) à l'extérieur de la chambre (13).
